(19) Europäisches Patentamt
European Patent Office
Office européen des brevets

(11) **EP 2 061 215 B1**

(12) **EUROPÄISCHE PATENTSCHRIFT**

(45) Veröffentlichungstag und Bekanntmachung des Hinweises auf die Patenterteilung:
**01.02.2012   Patentblatt 2012/05**

(51) Int Cl.:
**H04L 29/12** *(2006.01)*      *H04L 29/08* *(2006.01)*

(21) Anmeldenummer: **07022333.4**

(22) Anmeldetag: **17.11.2007**

(54) **Prüfmodul und Prüfverfahren zur Relevanzprüfung eines Kennzeichners**

Test module and test method for relevance testing of an identifier

Module de contrôle et procédé de contrôle pour le contrôle de pertinence d'une identification

(84) Benannte Vertragsstaaten:
**DE**

(43) Veröffentlichungstag der Anmeldung:
**20.05.2009   Patentblatt 2009/21**

(73) Patentinhaber: **Vector Informatik GmbH**
**70499 Stuttgart (DE)**

(72) Erfinder: **Pongs, Tobias**
**70794 Filderstadt (DE)**

(74) Vertreter: **Bregenzer, Michael**
**Patentanwälte**
**Magenbauer & Kollegen**
**Plochinger Strasse 109**
**73730 Esslingen (DE)**

(56) Entgegenhaltungen:
**EP-A- 1 069 731    EP-A- 1 223 725**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Prüfmodul und ein Prüfverfahren zur Relevanzprüfung eines Kennzeichners, der in einer Nachricht über ein Kommunikationsnetz an eine Kommunikationseinrichtung übermittelbar ist, durch Anwendung mindestens einer Hash-Funktion auf den Kennzeichner.

Die Relevanzprüfung von Kennzeichnern bzw. Identifizierern beispielsweise in einem Controller Area Network (CAN) ist aus dem europäischen Patent EP 1 223 725 bekannt. Dabei wird auf den Kennzeichner eine Hash-Funktion angewendet, um dessen Relevanz festzustellen. Die Hash-Funktion wird auf den Kennzeichner einmal oder mehrfach angewandt, um einen Speicherplatz aufzufinden, wo ein Vergleichswert zur Überprüfung der Relevanz des Kennzeichners gespeichert ist. Es ist daher möglich, dass mehrere Hash-Schritte notwendig sind, bis der Kennzeichner aufgefunden ist. Damit die Hash-Suche nicht zu lange dauert, wird in dem Patent vorgeschlagen, nach einer maximalen Anzahl von Suchschritten die Suche zu beenden und auf diesem Wege die Irrelevanz des Kennzeichners festzustellen.

Nachteilig bei dieser Vorgehensweise ist, dass in manchen Fällen vergleichsweise viele Hash-Suchschritte durchgeführt werden müssen, bis schließlich die Relevanz des Kennzeichners oder dessen Irrelevanz feststeht.

Es ist daher die Aufgabe der vorliegenden Erfindung, ein Prüfmodul und ein Prüfverfahren zur Relevanzprüfung eines Kennzeichners mit hoher Geschwindigkeit vorzuschlagen.

Zur Lösung der Aufgabe sind bei einem Prüfverfahren der eingangs genannten Art die nachfolgenden Schritte vorgesehen, für die das Prüfmodul der eingangs genannten Art entsprechende Mittel aufweist:

- Ermitteln eines ersten Verweiswert-Tabellenindexes durch Anwenden einer ersten Hash-Funktion auf den Kennzeichner und Ermitteln eines ersten Verweiswertes anhand des auf den ersten Verweiswert zeigenden ersten Verweiswert-Tabellenindexes,

- Ermitteln eines zweiten Verweiswert-Tabellenindexes durch Anwenden einer zweiten Hash-Funktion auf den Kennzeichner und Ermitteln eines zweiten Verweiswertes anhand des auf den zweiten Verweiswert zeigenden zweiten Verweiswert-Tabellenindexes,

- Bilden eines Relevanz-Tabellenindexes für eine Relevanzwert-Tabelle durch Verknüpfen des ersten und des zweiten Verweiswertes anhand einer Verknüpfungsfunktion,

- Ermitteln eines Relevanzwertes in der Relevanzwert-Tabelle anhand des auf den Relevanzwert zeigenden Relevanz-Tabellenindexes, und

- Prüfen der Relevanz des Kennzeichners für die Kommunikationseinrichtung durch Vergleich des Kennzeichners mit einem Relevanzwert.

Ein Grundgedanke der Erfindung ist, dass zwei oder mehr Hash-Funktionen auf den jeweils zu prüfenden Kennzeichner angewendet werden, um zunächst in der Verweistabelle, d.h. einer Art Zwischentabelle oder Justiertabelle, Verweiswerte zu ermitteln, auf die der anhand der jeweiligen Hash-Funktion aufgefundene Verweiswert-Tabellenindex zeigt. Die Verweiswerte, die man auch als Justierwerte bezeichnen kann, bilden dann die Ausgangsbasis für die Verknüpfungsfunktion. Die Verweiswerte werden nämlich mit Hilfe der Verknüpfungsfunktion, beispielsweise einer Summierung, Multiplikation oder dergleichen, miteinander verknüpft, um einen Relevanz-Tabellenindex zu gewinnen. Mit Hilfe dieses Relevanz-Tabellenindexes, der auf eine Relevanztabelle zeigt, ist dann ein Relevanzwert auffindbar, der zum Vergleich mit dem Kennzeichner dient.

Der Relevanzwert kann z.B. ein Kennzeichnerwert oder ein Teil eines Kennzeichnerwerts sein, z.B. die ersten 4 Ziffern oder dergleichen. Wenn der zu prüfende Kennzeichner mit dem Relevanzwert übereinstimmt, zumindest an einer oder mehreren zu prüfenden Stellen, ist der zu prüfende Kennzeichner gültig. Als Relevanzwert kann aber auch eine Ungültigkeitskennung an einem Relevanzwert-Tabellenplatz eingetragen sein.

Es versteht sich, dass zwei, drei oder auch weitere Hash-Funktionen auf den Kennzeichner anwendbar sind. Jeder Hash-Funktion ist eine Verweiswert-Tabelle zugeordnet. Das heißt dass beispielsweise auch drei Verweiswerte anhand der Verknüpfungsfunktion miteinander verknüpft werden, um den Relevanz-Tabellenindex aufzufinden.

Wenn der Relevanz-Tabellenindex gültig ist, das heißt beispielsweise auf einen Tabellenplatz innerhalb der

Relevanzwerttabelle zeigt, ist der Relevanzwert auffindbar, der zum Vergleich mit dem zu prüfenden Kennzeichner dient. Wenn jedoch der Relevanz-Tabellenindex ungültig ist, das heißt beispielsweise auf einen Bereich außerhalb der Relevanz-Tabelle zeigt, heißt dies im Umkehrschluss, dass der zu prüfende Kennzeichner ungültig ist.

Das erfindungsgemäße Verfahren kommt mit verhältnismäßig kleinen Verweiswert-Tabellen sowie Relevanzwert-Tabellen aus. Im Vergleich zu den bekannten Hash-Suchverfahren sind wesentlich weniger Suchschritte erforderlich.

Vorzugsweise sind die erste und die zweite Hash-Funktion voneinander verschieden.

Die ersten und zweiten Verweiswert-Tabellenindizes können auf ein und dieselbe Verweiswert-Tabelle verweisen, die dann wiederum die ersten und zweiten Verweiswerte enthält. Es versteht sich, dass jeder Hash-Funktion bzw. jedem Verweiswert-Tabellenindex eine individuelle Verweiswert-Tabelle zugeordnet sein kann. Bei zwei Hash-Funktionen sind dann beispielsweise zwei Verweiswert-Tabellen vorgesehen.

Die Relevanzwert-Tabelle enthält vorzugsweise sämtliche für die Kommunikationseinrichtung relevanten Kennzeichner. Es ist auch möglich, dass die Relevanzwert-Tabelle wie oben erläutert Ungültigkeitskennungen oder leere Plätze enthält.

Die erste Hash-Funktion und die zweite Hash-Funktion sowie die diesen zugeordnete mindestens eine Verweiswert-Tabelle sind vorzugsweise so ausgestaltet, dass durch Verknüpfen des ersten und des zweiten Verweiswertes für jeden möglichen zu prüfenden Kennzeichner ein auf einen gültigen Relevanzwert-Tabellenplatz verweisender eindeutiger individueller Relevanz-Tabellenindex oder aber auch ein ungültiger Relevanz-Tabellenindex ermittelbar ist. Somit ist eine eindeutige Zuordnung der Verweiswerte auf einen Relevanzwert-Tabellenplatz gewährleistet.

Wenn dieselbe Verweiswert-Tabelle für die erste und zweite Hash-Funktion (oder auch weitere Hash-Funktionen) verwendet wird, ist es vorteilhaft, wenn die erste Hash-Funktion und die zweite Hash-Funktion so ausgestaltet sind, dass bei der Ermittlung von Verweiswert-Kombinationen mit jeweils einem ersten und einem zweiten Verweiswert anhand eines jeweiligen Kennzeichners jeweils eine eindeutige Verweiswert-Kombination ermittelt wird, die von allen anderen anhand anderer Kennzeichner gebildeten Verweiswert-Kombinationen verschieden ist. Diese Verschiedenheit ist zweckmäßigerweise auch komutativ gewährleistet, insbesondere dann, wenn die Verknüpfungsfunktion komutativ ist, als z.B. bei einer Summation oder Multiplikation als Verknüpfungsfunktion. Bei nicht komutativen Verknüpfungsfunktionen ist die komutative Verschiedenheit nicht erforderlich. "Verweiswert-Kombination" heißt bei zwei Hash-Funktionen beispielsweise Paarungen von Verweiswerten, bei drei und mehr Hash-Funktionen beispielsweise Dreiergruppen oder Mehrfachgruppierungen von Verweiswerten.

Vorteilhaft kann auch vorgesehen sein, dass Kennzeichnerbereiche auf ihre Relevanz überprüft werden können. Bei Anwendung der ersten und der zweiten Hash-Funktion oder jeder weiteren Hash-Funktion auf die Kennzeichner des Kennzeichnerbereiches werden dann jeweils dieselben Kombinationen eines ersten und eines zweiten oder weiteren Verweiswerten zum Ermitteln eines Relevanz-Tabellenindexes ermittelt. Es ist auch möglich, dass die erste, und zweite oder weitere Hash-Funktion zwar unterschiedliche Kombinationen eines ersten und eines zweiten oder weiteren Verweiswertes ergeben, die anschließende Verknüpfung der Verweiswerte mittels der Verknüpfungsfunktion aber denselben Relevanz-Tabellenindex ergibt. Beim Prüfen der Relevanz des jeweiligen Kennzeichners aus dem Kennzeichnerbereich wird dann bei dem Relevanzwert, auf den der ermittelte Relevanz-Tabellenindex zeigt, mindestens eine Stelle ausgeblendet, beispielsweise durch Ausmaskieren.

Die erste Hash-Funktion oder die zweite Hash-Funktion enthalten zweckmäßigerweise eine Modulo-Operation oder eine Shift-Operation zum Abbilden des jeweiligen Tabellenindexes auf einen Bereich innerhalb der Verweiswert-Tabelle. Der Modulowert entspricht dabei der Länge der Tabelle. Wenn ein und dieselbe Verweiswert-Tabelle für beide Hash-Funktionen verwendet wird, wird für die jeweilige Modulo-Operation, die auf die erste und zweite Hash-Funktion angewendet wird, derselbe Modulowert verwendet. Auch bei der Verknüpfungsfunktion ist es vorteilhaft, eine Modulo-Operation oder eine Shift-Operation anzuwenden, um eine Abbildung auf die Länge der Relevanzwert-Tabelle zu gewährleisten.

Das Kommunikationsnetz ist zweckmäßigerweise ein Controller Area Network (CAN) oder Local Interconnect Network (LIN). Es versteht sich, dass man den erfinderischen Gedanken auch bei anderen Kommunikationsnetzwerken, bei denen Kennzeichner zu prüfen sind, anwenden kann.

Die Kommunikationseinrichtung bildet vorzugsweise einen Bestandteil eines Steuergerätes für ein Kraftfahrzeug oder ein Testwerkzeug für ein Kraftfahrzeug.

Es versteht sich, dass man das Prüfmodul in Hardware, in Software oder in Kombination von Hard- und Software realisieren kann.

Nachfolgend werden Ausführungsbeispiele der Erfindung anhand der Zeichnung erläutert. Es zeigen:

Figur 1         eine schematische Darstellung eines Kraftfahrzeuges mit einem Bus-Kommunikationsnetz, bei dem das erfindungsgemäße Prüfverfahren zur Prüfung von Kennzeichnern verwendet wird,

Figur 2         eine erste und eine zweite Verweiswert-Tabelle une eine Relevanzwert-Tabelle zur Anwendung des erfindungsgemäßen Prüfverfahrens,

Figuren 3a - 3c    die erfindungsgemäße Prüfung von Kennzeichnern anhand einer einzigen, für zwei Hash-Funktionen geeigneten Verweiswert-Tabelle und einer Relevanzwert-Tabelle,

Figuren 4a - 4d    eine grafische Methode zur Ermittlung der Verweiswert-Tabelle gemäß Figuren 3a - 3c, und

Figur 5          eine schematische Darstellung eines erfindungsgemäßen Prüfmoduls.

Ein durch einen Motor 11 antreibbares Kraftfahrzeug 10 hat zur Bewältigung verschiedenartiger Steuerfunktionen Steuergeräte 12 bis 16 an Bord, die über ein Kommunikationsnetz 17 miteinander kommunizieren. Das Steuergerät 12 ist beispielsweise zur Steuerung des Motors 11 vorgesehen, während die Steuergeräte 13, 14 und 15 beispielsweise Fensterheber, Klimageräte und dergleichen steuern. Das Steuergerät 16 ist für eine nicht dargestellte Heckbeleuchtung des Kraftfahrzeuges 10 zuständig. Das Kommunikationsnetz 17 enthält einen Bus 18, beispielsweise einen CAN-Bus, an dessen Busleitungen 19 die Steuergeräte 12 - 16 angeschlossen sind. Die Steuergeräte 12 - 16 übermitteln auf dem Kommunikationsnetz 17 Nachrichten 20 mit jeweils einem Kennzeichner ID.

Ferner ist an das Kommunikationsnetz 17 ein Test-Werkzeug 21, beispielsweise ein Notebook oder ein sonstiger mobiler Computer, über Anschlussleitungen 22 anschließbar. Das Test-Werkzeug 21 enthält einen Prozessor 27 zur Ausführung einer Testsoftware 23, mit der die auf dem Kommunikationsnetz 17 übertragenen Nachrichten 20 überwacht werden können. Vorzugsweise kann die Testsoftware 23 auch eigene Nachrichten 20 erzeugen und auf dem Kommunikationsnetz senden.

Die Testsoftware 23 sowie die Steuergeräte 12 - 16 enthalten jeweils eine Kommunikationseinrichtung 24 zur Kommunikation auf dem Kommunikationsnetz 17. Beispielsweise enthält die Kommunikationseinrichtung 24 einen Buscontroller, der in Hard- und/oder Software realisiert ist.

Zur Ermittlung der jeweils für das Steuergerät 12 - 16 relevanten Nachrichten 20 werten die Kommunikationseinrichtungen 24 den jeweils in der Nachricht 20 enthaltenen Kennzeichner ID aus. Hierfür ist bei den Kommunikationseinrichtungen 24 jeweils ein Prüfmodul 25 vorgesehen, das ebenfalls in Hardware und/oder Software realisiert sein kann. Das Prüfmodul 25 kann z.B. Bestandteil eines Buscontrollers sein.

Das Test-Werkzeug 21 und das Steuergerät 14 enthalten z.B. jeweils einen Prozessor 26, 27, mit denen Programmcode der Prüfmodule 25 ausführbar ist. Insbesondere aus Gründen der Flexibilität ist bei dem Test-Werkzeug 21 eine Realisierung des Prüfmoduls 25 in Software bevorzugt. Aus Gründen einer hohen Leistungsfähigkeit und/oder einer leichteren Herstellbarkeit eignet sich bei einem oder mehreren der Steuergeräte 12 - 16 eine Realisierung des jeweiligen Prüfmoduls 25 zumindest teilweise in Hardware, z.B. als Bestandteil eines Buscontrollers.

Ob eine jeweilige Nachricht 20, die von einer Kommunikationseinrichtung 24 empfangen wird, tatsächlich relevant ist, wird anhand des Kennzeichners ID überprüft. Die Prüfmodule 25 wenden dabei das nachfolgend in zwei Varianten erläuterte erfindungsgemäße Prüfverfahren an.

Beispielsweise soll das Prüfmodul 25 des Steuergerätes 12 die für das Steuergerät 12 relevanten Nachrichten 20 ermitteln. Diese Nachrichten 20 sind dann für das Steuergerät 12 relevant, wenn sie einen der Kennzeichner bzw. Identifizierer ID = 10, 31, 43, 14 oder 29 enthalten. Diese Kennzeichner sind in der Relevanzwert-Tabelle 30a in der Relevanzwert-Spalte 31a als Relevanzwerte IDtest angegeben sind. Auf die Relevanzwerte IDtest verweisen Relevanz-Tabellenindizes RI, die in einer Relevanz-Tabellenindexspalte 32a eingetragen sind. Der Relevanz-Tabellenindex RI = 5 zeigt auf eine Ungültigkeitskennung 33.

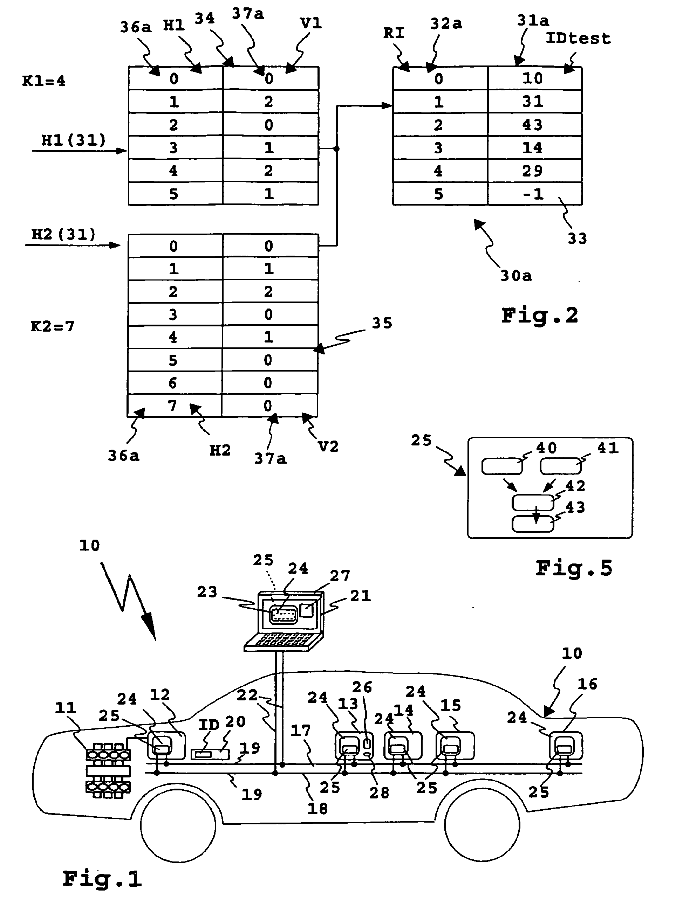

Nun wäre es zwar prinzipiell möglich, einen eingehenden Kennzeichner ID mit den Relevanzwerten IDtest auf seine Relevanz zu überprüfen. Hierzu wären beim Ausführungsbeispiel gemäß Figur 2 bei einem sequentiellen Durcharbeiten der Relevanzwert-Tabelle 30a vom Relevanzwert IDtest = 10 bis zur Ungültigkeitskennung 33 maximal sechs Vergleichsoperationen notwendig, um einen Kennzeichner ID als irrelevant einzugruppieren. Bei einer größeren Anzahl von möglichen Kennzeichnern ID, die für das Steuergerät relevant sein können, ist diese Prüfung jedoch aufwändig und in der Praxis daher ineffizient. Die Erfindung geht hier einen neuen Weg:

Der jeweils empfangene Kennzeichner ID wird erfindungsgemäß nur mit einem einzigen Relevanzwert IDtest aus der Relevanzwert-Tabelle 30a verglichen. Somit ist an sich nur eine einzige Vergleichs- bzw. Überprüfungsoperation erforderlich. Zur Ermittlung des jeweiligen Relevanz-Tabellenindexes RI dienen für das Prüfmodul 25 des Steuergerätes 12 eine erste Verweiswert-Tabelle 34 sowie eine zweite Verweiswert-Tabelle 35 sowie die nachfolgenden Hash-Funktionen:

$$H1 = (ID\ XOR\ K1)\ MOD\ VT1max \qquad\qquad (1)$$

$$H2 = (ID\ XOR\ K2)\ MOD\ VT2max \qquad\qquad (2)$$

Die Hash-Funktionen (1) und (2) sind Streuwertfunktionen, die das Prüfmodul 25 auf jeden empfangenen Kennzeichner ID anwendet, um einen Verweiswert-Tabellenindex H1 für die erste Verweiswert-Tabelle 34 und einen zweiten Verweiswert-Tabellenindex H2 zu ermitteln, die in Verweiswert-Tabellenindexspalten 36a der Verweiswert-Tabellen 34, 35 eingetragen sind.

Bei der Hash-Funktion (1) wendet z.B. eine ein Prüfmittel bildende Prüffunktion 40 des Prüfmoduls 25 zunächst eine Konstante K1 = 4 im Rahmen einer XOR-Operation auf den empfangenen Kennzeichner ID an, um einen Relevanz-Tabellenindex RI zu gewinnen. Im Rahmen der XOR-Operation ist es allerdings möglich, dass ein Tabellenindex ermittelt wird, der größer ist als die Verweiswert-Tabellenlängen VT1max der ersten Verweiswert-Tabelle 34. Daher wendet das Prüfmodul 25 dann eine Modulo-Operation mit der ersten Verweiswert-Tabellenlänge VT1max auf das Ergebnis der XOR-Operation an. Für die Kennzeichner ID = 29, 10, 31, 14 und 43 gewinnt das Prüfmodul 25 dabei die Verweiswert-Tabellenindexes H1 = 1, 2, 3, 4 und 5. In Figur 2 ist H1 für ID = 31 dargestellt.

Bei der Hash-Funktion (2) ist die Konstante K2 = 7 gewählt. Die Hash-Funktion (2) wird z.B. durch eine ein 2. Prüfmittel bildende Prüffunktion 41 des Prüfmoduls 25 realisiert. Die Länge der Verweiswert-Tabelle 35 beträgt VT2max = 8. Somit ergibt sich beispielsweise für den Kennzeichner ID = 31 ein Verweiswert-Tabellenindex H2 = 0. Bei den weiteren relevanten Kennzeichnern ID = 14, 29, 43 und 10 lauten die Ergebnisse H2(ID) = 1, 2, 4 und 5. In Figur 2 ist das Ergebnis für H2 (31) dargestellt.

Die Verweiswert-Tabellenindizes H1 und H2 verweisen jeweils auf Verweiswerte V1 und V2, die in Verweiswertspalten 37a der Verweiswert-Tabellen 34, 35 angegeben sind. Das Prüfmodul 25 ermittelt sodann den zugeordneten Relevanz-Tabellenindex RI anhand der den Verweiswert-Tabellenindizes zugeordneten H1 und H2 Verweiswerte V1 und V2 z.B. gemäß der nachfolgenden Formel:

$$RI = (V1(H1) + V2(H2)) \text{ MOD } RTmax \qquad (3)$$

Die Verweiswerte V1 und V2 werden durch eine Verknüpfungsfunktion 42 des Prüfmoduls 25, z.B. durch eine Summation, beispielsweise entsprechend Formel (3), miteinander verknüpft. Es versteht sich, dass auch jede andere Verknüpfung, beispielsweise eine Multiplikation, Subtraktion oder sonstige Verknüpfungsoperation ohne weiteres denkbar ist.

Sinngemäß dasselbe gilt für die erste und zweite Hash-Funktion, die bei den obigen Formeln (1) und (2) eine XOR-Operation vorsieht. Auch hier wäre eine andersartige mathematische Operation möglich, um eine ausreichende Streuung der Hash-Werte zu erzielen.

Bei der Formel (3) ist durch die Modulo-Operation, die auf die Summe der Verweiswerte V1 und V2 angewendet wird, sichergestellt, dass der Relevanz-Tabellenindex RI stets auf einen Tabellenplatz innerhalb der Relevanzwert-Tabelle 30a verweist. Durch Verknüpfung der Verweiswerte V1 = 1 und V2 = 0, die in Figur 2 durch einen Pfeil dargestellt ist, ermittelt das Prüfmodul 25, z.B. eine Prüffunktion 43, beispielsweise für den Kennzeichner ID = 31 den Relevanz-Tabellenindex RI = 1. Der Relevanz-Tabellenindex R1 = 1 verweist auf den Relevanzwert IDtest = 31, der dem Kennzeichner ID = 31 entspricht. Somit gelingt für den Kennzeichner ID = 31 die nachfolgende Prüfung:

$$ID = IDtest \qquad (4)$$

Der Kennzeichner ID = 31 ist daher für das Steuergerät 12 relevant.

Eine Irrelevanz des jeweiligen Kennzeichners ID kann auch dadurch festgestellt werden, dass er beim Vergleich mit dem Ungültigkeitskennung 33 als ungültig bzw. irrelevant erkannt wird.

Ferner ist es möglich, dass das Prüfmodul 25 anhand der nachfolgenden Formel (5) eine Ungültigkeit eines Kennzeichners ID ermittelt.

$$RI >= MaxID \qquad (5)$$

Bei der Formel (5) ist der Relevanz-Tabellenindex RI größer oder gleich als die maximale Anzahl empfangbarer Kennzeichner MaxID. MaxID beträgt beispielsweise für das Steuergerät 12 fünf, weil maximal fünf Kennzeichner 10, 31, 43, 14, 29 für das Steuergerät 12 relevant sind. Wenn also der Relevanz-Tabellenindex RI = 5 beträgt, heißt dies, dass der empfangene Kennzeichner ID irrelevant für das Steuergerät 12 ist.

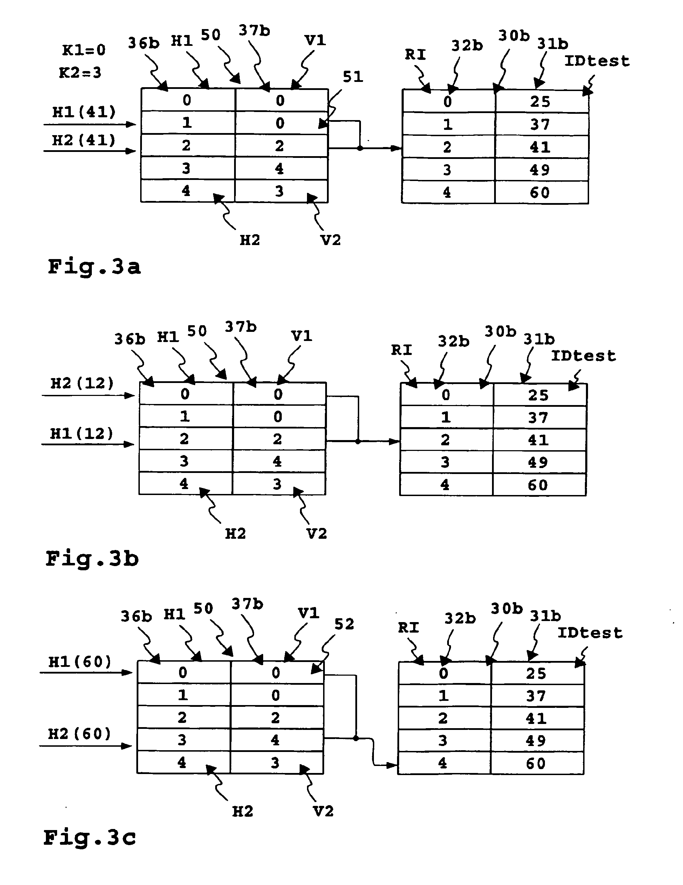

Bei dem in den Figuren 3a - 3c dargestellten Ausführungsbeispiel genügt eine einzige Verweiswert-Tabelle 50. Die Verweiswert-Tabelle 50 bildet eine erste und eine zweite Verweiswert-Tabelle beispielsweise für das Prüfmodul 25 des Steuergerätes 16. Für das Steuergerät 16 sind die Kennzeichner ID = 25, 37, 41, 49 und 60 relevant, die als Relevanzwerte IDtest in eine Relevanzwert-Spalte 31b einer Relevanzwert-Tabelle 30b eingetragen sind. Auf die Relevanzwerte IDtest der Relevanzwert-Tabelle 30b verweisen in einer Relevanz-Tabellenindexspalte 32b eingetragene Relevanz-Tabellenindizes RI. Damit bei der obigen Formel (3) der jeweilige Relevanz-Tabellenindex RI auf einen Tabellenplatz der Relevanzwert-Tabelle 30b zeigt, beträgt die Relevanzwert-Tabellenlänge RTmax = 5, das heißt es ist keine zusätzliche Tabellenzeile vorhanden, die eine Ungültigkeitskennung enthält, wie beispielsweise bei der Relevanzwert-Tabelle 30a. Die Prüfung (5) kann daher entfallen.

Die integrierte erste und zweite Verweiswert-Tabelle 50 enthält eine Verweiswert-Tabellenindexspalte 36b für die Verweiswert-Tabellenindizes H1 und H2, die gemäß den obigen Formeln (1) und (2) ermittelt werden. Dabei sind als Konstanten K1 = 0 und K2 = 3 gewählt. VT1max und VT2max sind jeweils fünf, da die Verweiswert-Tabellenlänge der Verweiswert-Tabelle 50 VT1max = VT2max = 5 ist.

Die Anwendung der Formeln (1) und (2) auf den Kennzeichner ID = 41 ergibt beispielsweise den ersten Verweiswert-Tabellenindex H1 = 1 und den zweiten Verweiswert-Tabellenindex H2 = 2, was in Figur 3a dargestellt ist. Die Verweiswert-Tabellenindizes H1 und H2 verweisen dabei auf einen ersten und zweiten Verweiswert V1 = 0 und V2 = 2, die in einer Verweiswertspalte 37b der Verweiswert-Tabelle 50 eingetragen sind. Die Verweiswerte V1 und V2 werden gemäß der obigen Formel (3) durch eine Summierung miteinander verknüpft, um den Relevanz-Tabellenindex RI zu gewinnen, der bei dem Beispiel gemäß Figur 3a zwei beträgt und auf den Relevanzwert IDtest = 41 verweist. Somit ermittelt das Prüfmodul 25 anhand der Vergleichsoperation (4), dass der Kennzeichner ID = 41 für das Steuermodul 16 relevant ist.

Dasselbe gilt sinngemäß für den Kennzeichner ID = 60, für den H1 = 0 und H2 = 4 beträgt, was in der Summe gemäß Formel (4) einen Relevanz-Tabellenindex RI = 4 ergibt, der auf den Relevanzwert IDtest = 60 verweist.

Anders verhält es sich bei dem Kennzeichner ID = 12. Für diesen ermittelt das Prüfmodul 25 des Steuergeräts 16 beispielsweise die beiden Verweiswert-Tabellenindizes H1 = 2 und H2 = 0, die auf Verweiswerte V1 = 2 und V2 = 0 verweisen, deren Summe RI = 2 beträgt. Für den Relevanz-Tabellenindex RI ist jedoch der Relevanzwert IDtest = 41 in der Relevanzwert-Spalte 31a eingetragen, so dass die Prüfung gemäß (4) eine Irrelevanz des Kennzeichners ID = 12 für das Steuergerät 16 ergibt.

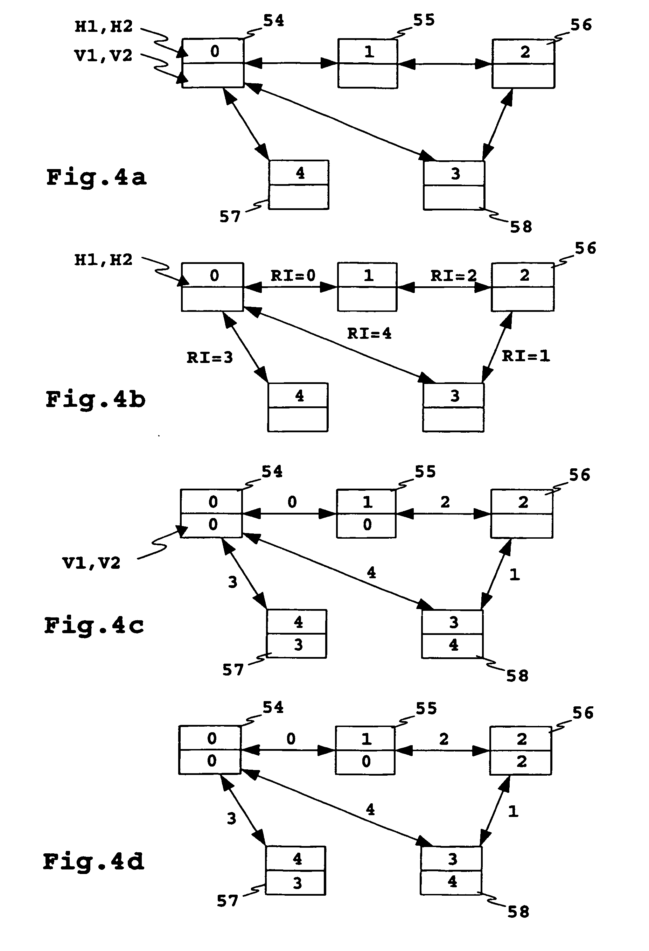

Bei der Verweiswert-Tabelle 50 ist sichergestellt, dass für jeden der Kennzeichner ID = 25, 37, 41, 49 und 60 die erste und zweite Hash-Funktion (1) und (2) so ausgestaltet sind, dass durch Verknüpfen der ersten und zweiten Verweiswerte V1 und V2 für jeden zu prüfenden Kennzeichner ID = 25, 37, 41, 49 und 60 ein auf einen gültigen Tabellenplatz verweisender, eindeutiger individueller Relevanz-Tabellenindex RI ermittelbar ist. Dies ist beim Ausführungsbeispiel gemäß Figuren 3a - 3b dadurch sichergestellt, dass die erste Hash-Funktion (1) und die zweite Hash-Funktion (2) jeweils eine Verweiswert-Kombination mit einem ersten und zweiten Verweiswert V1, V2 ergeben, die eindeutig und von allen anderen für andere Kennzeichner gebildeten Verweiswert-Kombinationen verschieden ist. Beispielsweise ist die Verweiswert-Kombination 51 mit den Verweiswerten V1 = 0 und V2 = 2 für den Kennzeichner ID = 41 gemäß Figur 3a unterschiedlich von einer Verweiswert-Kombination 52 mit den Verweiswerten V1 = 0 und V2 = 4 für den Kennzeichner ID = 60. Zur Ermittlung derartig eindeutiger Verweiswert-Kombinationen eignet sich beispielsweise die anhand der Figuren 4a - 4d dargestellte Methode.

In Figur 4a sind zunächst fünf Kombinationstabellen 54 - 58 dargestellt, in deren oberer Zeile die Verweiswert-Tabellenindizes H1 und H2 = 0, 1, 2, 3 und 4 eingetragen werden. Jede der Kombinationstabellen 54 - 58 wird mit einer weiteren Kombinationstabelle 54 - 58 durch einen Pfeil verknüpft, wobei jedem Pfeil, wie in Figur 4b dargestellt, sodann ein Relevanz-Tabellenindex RI = 0 bis RI = 4 zugeordnet wird.

In weiteren Arbeitsschritten, die in den Figuren 4c und 4d beispielhaft dargestellt sind, wird sodann ein Verweiswert V1 und V2 ermittelt, der in der unteren Zeile der Kombinationstabellen 54 - 58 eingetragen ist. Dieser ergibt sich gemäß der obigen Formel (3) derart, dass eine Summe der jeweiligen Verweiswerte V1 und V2 den Relevanz-Tabellenindex RI ergibt, wobei die eine Modulo-Operation mit der Relevanzwert-Tabelle RTmax durchgeführt wird. Um beispielsweise den Relevanz-Tabellenindex RI = 0 zwischen den Kombinationstabellen 54 und 55 zu erhalten, muss als zugehöriger Verweiswert V1 und V2 in den beiden Kombinationstabellen 54 und 55 jeweils Null eingetragen werden. Davon ausgehend ergibt sich dann beispielsweise für die Kombinationstabellen 55 und 58, das in der unteren Zeile 3 und 4 eingetragen werden muss, um den Relevanz-Tabellenindex RI = 3 bzw. 4 an den Verbindungspfeilen zur Kombinationstabelle 54 zu erhalten.

Die Verweiswert-Tabellen 34, 35, 50 und/oder die Relevanzwert-Tabellen 30a, 30b können in den Prüfmodulen 25 fest gespeichert sein, z.B. in Programmcode realisiert sein. Es ist auch möglich, dass die Verweiswert-Tabellen 34, 35, 50 und/oder die Relevanzwert-Tabellen 30a, 30b zumindest teilweise parametrierbar sind und z.B. in einen Speicher 28, z.B. einen EPROM-Speicher, eines Prüfmoduls 25 oder einer Kommunikationseinrichtung 24 speicherbar sind.

**Patentansprüche**

1.  Prüfverfahren zur Relevanzprüfung eines Kennzeichners (ID), der in einer Nachricht (20) über ein Kommunikationsnetz (17) an eine Kommunikationseinrichtung (24) übermittelbar ist, durch Anwendung mindestens einer Hash-Funktion (1, 2) auf den Kennzeichner (ID), mit den Schritten:

- Ermitteln eines ersten Verweiswert-Tabellenindexes (H1) durch Anwenden einer ersten Hash-Funktion (1) auf den Kennzeichner (ID) und Ermitteln eines ersten Verweiswertes (V1) anhand des auf den ersten Verweiswert (V1) zeigenden ersten Verweiswert-Tabellenindexes (H1),
- Ermitteln eines zweiten Verweiswert-Tabellenindexes (H2) durch Anwenden einer zweiten Hash-Funktion (2) auf den Kennzeichner (ID) und Ermitteln eines zweiten Verweiswertes anhand des auf den zweiten Verweiswert zeigenden zweiten Verweiswert-Tabellenindexes (H2),
- Bilden eines Relevanz-Tabellenindexes (RI) für eine Relevanzwert-Tabelle (30a, 30b) durch Verknüpfen des ersten und des zweiten Verweiswertes (V1) anhand einer Verknüpfungsfunktion (3),
- Ermitteln eines Relevanzwertes (IDtest) in der Relevanzwert-Tabelle (30a, 30b) anhand des auf den Relevanzwert (IDtest) zeigenden Relevanz-Tabellenindexes (RI), und
- Prüfen der Relevanz des Kennzeichners (ID) für die Kommunikationseinrichtung (24) durch Vergleich des Kennzeichners (ID) mit dem Relevanzwert (IDtest) oder Ermitteln einer Irrelevanz des Kennzeichners (ID), wenn der Relevanz-Tabellenindex (RI) ungültig ist.

2. Prüfverfahren nach Anspruch 1, **dadurch gekennzeichnet, dass** die zweite Hash-Funktion (2) von der ersten Hash-Funktion (1) verschieden ist.

3. Prüfverfahren nach Anspruch 1 oder 2, **dadurch gekennzeichnet, dass** der erste und der zweite Verweiswert-Tabellenindex (H1, H2) auf dieselbe Verweiswert-Tabelle (50) verweisen, wobei die Verweiswert-Tabelle (50) den ersten und den zweiten Verweiswert (V1, V2) enthält.

4. Prüfverfahren nach einem der vorhergehenden Ansprüche, **dadurch gekennzeichnet, dass** die Relevanzwert-Tabelle (30a, 30b) sämtliche für die Kommunikationseinrichtung (24) relevanten Kennzeichner (ID) enthält.

5. Prüfverfahren nach einem der vorhergehenden Ansprüche, **dadurch gekennzeichnet, dass** die Relevanzwert-Tabelle (30a, 30b) an mindestens einem Tabellenplatz eine Ungültigkeitskennung (33) enthält.

6. Prüfverfahren nach einem der vorhergehenden Ansprüche, **dadurch gekennzeichnet, dass** die erste Hash-Funktion (1) und die zweite Hash-Funktion (2) und die diesen Hash-Funktionen (1, 2) jeweils zugeordnete Verweiswert-Tabelle (34, 35; 50) so ausgestaltet sind, dass durch Verknüpfen des ersten und des zweiten Verweiswertes ($V_1$, V2) für jeden möglichen zu prüfenden Kennzeichner (ID) ein auf einen gültigen Relevanzwert-Tabellenplatz (30a, 30b) verweisender eindeutiger individueller Relevanz-Tabellenindex (RI) oder ein ungültiger Relevanz-Tabellenindex (RI) ermittelbar ist.

7. Prüfverfahren nach einem der vorhergehenden Ansprüche, **dadurch gekennzeichnet, dass** die erste Hash-Funktion (1) und die zweite Hash-Funktion (2) so ausgestaltet sind, dass bei der Ermittlung von Verweiswert-Kombinationen (51, 52) mit jeweils einem ersten und einem zweiten Verweiswert (V1, V2) anhand eines jeweiligen Kennzeichners (ID) jeweils eine eindeutige Verweiswert-Kombination (51, 52) ermittelt wird, die von allen anderen anhand anderer Kennzeichner (ID) gebildeten Verweiswert-Kombinationen (51, 52) verschieden ist.

8. Prüfverfahren nach einem der vorhergehenden Ansprüche, **gekennzeichnet durch** Ermitteln einer Relevanz von Kennzeichnern (ID) eines Kennzeichnerbereichs, wobei bei Anwendung der ersten und der zweiten Hash-Funktion (1, 2) auf die Kennzeichner (ID) des Kennzeichnerbereichs jeweils dieselbe Kombination eines ersten und eines zweiten Verweiswertes (V1, V2) zum Ermitteln eines Relevanz-Tabellenindexes (RI) ermittelt wird, und wobei bei dem Prüfen der Relevanz des jeweiligen Kennzeichners (ID) aus dem Kennzeichnerbereich mindestens eine Stelle des Kennzeichners (ID) und des Relevanzwerts (IDtest) ausgeblendet wird, auf den der Relevanz-Tabellenindex (RI) zeigt.

9. Prüfverfahren nach einem der vorhergehenden Ansprüche, **dadurch gekennzeichnet, dass** die erste Hash-Funktion (1) und/oder die zweite Hash-Funktion (2) und/oder die Verknüpfungsfunktion (3) eine Modulo-Operation und/oder eine Shift-Operation zum Abbilden des jeweiligen Tabellenindexes auf einen Bereich innerhalb der Tabelle aufweisen, auf den der Tabellenindex jeweils zeigt.

10. Prüfverfahren nach einem der vorhergehenden Ansprüche, **dadurch gekennzeichnet, dass** das Kommunikationsnetz (17) einen Bus (18), insbesondere ein Controller Area Network oder ein Local Interconnect Network, umfasst.

**11.** Prüfverfahren nach einem der vorhergehenden Ansprüche, **gekennzeichnet durch** Ermitteln mindestens eines dritten Verweiswert-Tabellenindexes **durch** Anwendung mindestens einer dritten Hash-Funktion auf den Kennzeichner (ID) , Ermitteln eines dritten Verweiswertes anhand des auf den dritten Verweiswert zeigenden mindestens einen dritten Verweiswert-Tabellenindexes und Bilden des Relevanz-Tabellenindexes (RI) für eine Relevanzwert-Tabelle (30a, 30b) **durch** Verknüpfen des ersten, des zweiten und des mindestens einen dritten Verweiswertes (V1, V2) anhand der Verknüpfungsfunktion (3).

**12.** Prüfverfahren nach Anspruch 11, **dadurch gekennzeichnet, dass** der mindestens eine dritte Verweiswert-Tabellenindex auf die erste, die zweite oder mindestens eine dritte Verweiswert-Tabelle verweist, wobei die jeweilige Verweiswert-Tabelle den dritten Verweiswert enthält.

**13.** Prüfmodul zur Relevanzprüfung eines Kennzeichners (ID) , der in einer Nachricht (20) über ein Kommunikationsnetz (17) an eine Kommunikationseinrichtung (24) übermittelbar ist, durch Anwendung mindestens einer Hash-Funktion (1, 2) auf den Kennzeichner (ID), mit Mitteln (40-43) zum:

- Ermitteln eines ersten Verweiswert-Tabellenindexes (H1) durch Anwenden einer ersten Hash-Funktion (1) auf den Kennzeichner (ID) und Ermitteln eines ersten Verweiswertes (V1) anhand des auf den ersten Verweiswert (V1) zeigenden ersten Verweiswert-Tabellenindexes (H1),
- Ermitteln eines zweiten Verweiswert-Tabellenindexes (H2) durch Anwenden einer zweiten Hash-Funktion (2) auf den Kennzeichner (ID) und Ermitteln eines zweiten Verweiswertes (V1) anhand des auf den zweiten Verweiswert (V1) zeigenden zweiten Verweiswert-Tabellenindexes (H2),
- Bilden eines Relevanz-Tabellenindexes (RI) für eine Relevanzwert-Tabelle (30a, 30b) durch Verknüpfen des ersten und des zweiten Verweiswertes (V1) anhand einer Verknüpfungsfunktion (3),
- Ermitteln eines Relevanzwertes (IDtest) in der Relevanzwert-Tabelle (30a, 30b) anhand des auf den Relevanzwert (IDtest) zeigenden Relevanz-Tabellenindexes (RI), und
- Prüfen der Relevanz des Kennzeichners (ID) für die Kommunikationseinrichtung (24) durch Vergleich des Kennzeichners (ID) mit dem Relevanzwert (IDtest) oder Ermitteln einer Irrelevanz des Kennzeichners (ID), wenn der Relevanz-Tabellenindex (RI) ungültig ist.

**14.** Prüfmodul nach Anspruch 13, **dadurch gekennzeichnet, dass** es durch einen Prozessors (26, 27) ausführbaren Programmcode enthält, der bei Ausführung durch den Prozessor (26, 27) die Mitteln (40-43) implementiert.

**15.** Speichermittel mit einem darauf gespeicherten Prüfmodul nach Anspruch 14.

**16.** Kommunikationseinrichtung (24) mit einem Prüfmodul nach Anspruch 13 oder 14.

**17.** Kommunikationseinrichtung (24) nach Anspruch 16, **dadurch gekennzeichnet, dass** sie als elektrisches Steuergerät (12-16) für ein Kraftfahrzeug (10) oder als ein Test-Werkzeug (21) für ein Kraftfahrzeug (10) ausgestaltet ist.

**Claims**

**1.** Checking method for the relevance check of an identifier (ID) which can be transmitted in a message (20) to a communication device (24) via a communication network (17) by the application of at least one hash function (1, 2) to the identifier (ID), comprising the steps of:

- determining a first reference value table index (H1) by applying a first hash function (1) to the identifier (ID) and determining a first reference value (V1) using the first reference value table index (H1) pointing at the first reference value (V1),
- determining a second reference value table index (H2) by applying a second hash function (2) to the identifier (ID) and determining a second reference value using the second reference value table index (H2) pointing at the second reference value,
- forming a relevance table index (RI) for a relevance value table (30a, 30b) by linking the first and the second reference value (V1) using a linking function (3),
- determining a relevance value (IDtest) in the relevance value table (30a, 30b) using the relevance table index (RI) pointing to the relevance value (IDtest), and
- checking the relevance of the identifier (ID) for the communication device (24) by comparing the identifier (ID) to the relevance value (IDtest) or determining an irrelevance of the identifier (ID) if the relevance table index (RI) is invalid.

2. Checking method according to claim 1, **characterised in that** the second hash function (2) differs from the first hash function (1).

3. Checking method according to claim 1 or 2, **characterised in that** the first and the second reference value table index (H1, H2) point to the same reference value table (50), the reference value table (50) containing the first and second reference values (V1, V2).

4. Checking method according to any of the preceding claims, **characterised in that** the relevance value table (30a, 30b) contains all identifiers (ID) which are relevant to the communication device (24).

5. Checking method according to any of the preceding claims, **characterised in that** the relevance value table (30a, 30b) contains an invalidity identification (33) in at least one table location.

6. Checking method according to any of the preceding claims, **characterised in that** the first hash function (1) and the second hash function (2) and the reference value table (34, 35; 50) assigned to the hash functions (1, 2) are designed such that, by linking the first and the second reference value (V1, V2), an individual relevance table index (RI) pointing to a valid relevance value table location (30a, 30b) or an invalid relevance table index (RI) can be determined for each possible identifier (ID) to be checked.

7. Checking method according to any of the preceding claims, **characterised in that** the first hash function (1) and the second hash function (2) are designed such that, in determining reference value combinations (51, 52) with a first and a second reference value (V1, V2) each, a unique reference value combination (51, 52) is determined in each case, which differs from all other reference value combinations (51, 52) which are formed using other identifiers (ID).

8. Checking method according to any of the preceding claims, **characterised by** determining a relevance of identifiers (ID) of an identifier range, wherein, when applying the first and the second hash function (1, 2) to the identifiers (ID) of the identifier range, the same combination of a first and a second reference value (V1, V2) is in each case determined for determining a relevance table index (RI), and wherein, when checking the relevance of the respective identifier (ID) from the identifier range, at least one digit of the identifier (ID) and of the relevance value (IDtest) to which the relevance table index (RI) points is blocked out.

9. Checking method according to any of the preceding claims, **characterised in that** the first hash function (1) and/or the second hash function (2) and/or the linking function (3) comprise(s) a modulo operation and/or a shift operation for mapping the respective table index on a region within the table to which the table index points in each case.

10. Checking method according to any of the preceding claims, **characterised in that** the communication network (17) includes a bus (18), in particular a controller area network or a local interconnect network.

11. Checking method according to any of the preceding claims, **characterised by** determining at least one third reference value index by applying at least one third hash function to the identifier (ID), by determining a third reference value using the at least one third reference value index pointing to the third reference value, and by forming the relevance table index (RI) for a relevance value table (30a, 30b) by linking the first, the second and the at least one third reference value (V1, V2) using the linking function (3).

12. Checking method according to claim 11, **characterised in that** the at least one third reference value index points to the first, the second or the at least one third reference value table, the respective reference value table containing the third reference value.

13. Checking module for the relevance check of an identifier (ID) which can be transmitted in a message (20) to a communication device (24) via a communication network (17) by the application of at least one hash function (1, 2) to the identifier (ID), comprising means (40-43) for:

    - determining a first reference value table index (H1) by applying a first hash function (1) to the identifier (ID) and determining a first reference value (V1) using the first reference value table index (H1) pointing at the first reference value (V1),

- determining a second reference value table index (H2) by applying a second hash function (2) to the identifier (ID) and determining a second reference value (V1) using the second reference value table index (H2) pointing at the second reference value (V1),
- forming a relevance table index (RI) for a relevance value table (30a, 30b) by linking the first and the second reference value (V1) using a linking function (3),
- determining a relevance value (IDtest) in the relevance value table (30a, 30b) using the relevance table index (RI) pointing to the relevance value (IDtest), and
- checking the relevance of the identifier (ID) for the communication device (24) by comparing the identifier (ID) to the relevance value (IDtest) or determining an irrelevance of the identifier (ID) if the relevance table index (RI) is invalid.

14. Checking module according to claim 13, **characterised in that** it contains a programme code executable by a processor (26, 27), which implements the means (40-43) when being executed by the processor (26, 27).

15. Memory means with a checking module according to claim 14 stored thereon.

16. Communication device (24) with a checking module according to claim 13 or 14.

17. Communication device (24) according to claim 16, **characterised in that** it is designed as an electric control unit (12-16) for a motor vehicle (10) or as a testing tool (21) for a motor vehicle (10).

**Revendications**

1. Procédé de contrôle permettant le contrôle de pertinence d'un identifiant (ID), qui peut être transmise dans un message (20) à un dispositif de communication (24) par l'intermédiaire d'un réseau de communication (17), par l'application d'au moins une fonction de hachage (1, 2) sur l'identifiant (ID), comprenant les étapes consistant à :

- déterminer un premier indice de tableau de valeurs de référence (H1) par l'application d'une première fonction de hachage (1) sur l'identifiant (ID) et déterminer une première valeur de référence (V1) à l'aide du premier indice de tableau de valeurs de référence (H1) pointant vers la première valeur de référence (V1),
- déterminer un deuxième indice de tableau de valeurs de référence (H2) par l'application d'une deuxième fonction de hachage (2) sur l'identifiant (ID) et déterminer une deuxième valeur de référence à l'aide du deuxième indice de tableau de valeurs de référence (H2) pointant vers la deuxième valeur de référence,
- former un indice de tableau de pertinences (RI) pour un tableau de valeurs de pertinence (30a, 30b) par l'association de la première et de la deuxième valeur de référence (V1) à l'aide d'une fonction d'association (3),
- déterminer une valeur de pertinence (IDtest) dans le tableau de valeurs de pertinence (30a, 30b) à l'aide de l'indice de tableau de pertinences (RI) pointant vers la valeur de pertinence (IDtest), et
- contrôler la pertinence de l'identifiant (ID) pour le dispositif de communication (24) par la comparaison de l'identifiant (ID) avec la valeur de pertinence (IDtest) ou déterminer une non-pertinence de l'identifiant (ID) lorsque l'indice de tableau de pertinences (RI) n'est pas valide.

2. Procédé de contrôle selon la revendication 1, **caractérisé en ce que** la deuxième fonction de hachage (2) est différente de la première fonction de hachage (1).

3. Procédé de contrôle selon la revendication 1 ou 2, **caractérisé en ce que** le premier et le deuxième indice de tableau de valeurs de référence (H1, H2) renvoient au même tableau de valeurs de référence (50), le tableau de valeurs de référence (50) contenant la première et la deuxième valeur de référence (V1, V2).

4. Procédé de contrôle selon l'une quelconque des revendications précédentes, **caractérisé en ce que** le tableau de valeurs de pertinence (30a, 30b) contient toutes les identifiants (ID) pertinents pour le dispositif de communication (24).

5. Procédé de contrôle selon l'une quelconque des revendications précédentes, **caractérisé en ce que** le tableau de valeurs de pertinence (30a, 30b) contient un indicateur de non-validité (33) à au moins une place du tableau.

6. Procédé de contrôle selon l'une quelconque des revendications précédentes, **caractérisé en ce que** la première fonction de hachage (1) et la deuxième fonction de hachage (2) et les tableaux de valeurs de référence (34, 35 ;

50) attribués respectivement à ces fonctions de hachage (1, 2) sont conçus de sorte que l'association des première et deuxième valeurs de référence (V1, V2) permette de déterminer, pour chaque éventuel identifiant (ID) à contrôler, un indice de tableau de pertinences (RI) individuel, univoque, renvoyant à une place valide du tableau de valeurs de pertinence (30a, 30b), ou un indice de tableau de pertinences (RI) non valide.

7. Procédé de contrôle selon l'une quelconque des revendications précédentes, **caractérisé en ce que** la première fonction de hachage (1) et la deuxième fonction de hachage (2) sont conçues de sorte que, lors de la détermination de combinaisons de valeurs de référence (51, 52) avec respectivement une première et une deuxième valeur de référence (V1, V2) à l'aide d'un identifiant (ID) respective, on peut déterminer à chaque fois une combinaison de valeurs de référence (51, 52) qui est différente de toutes les autres combinaisons de valeurs de référence (51, 52) formées à l'aide d'autres identifiants (ID).

8. Procédé de contrôle selon l'une quelconque des revendications précédentes, **caractérisé par** la détermination d'une pertinence d'identifiants (ID) d'une plage d'identifiants, lors de l'application de la première et de la deuxième fonction de hachage (1, 2) sur les identifiants (ID) de la plage d'identifiants, la même combinaison d'une première et d'une deuxième valeur de référence (V1, V2) étant déterminée à chaque fois pour déterminer un indice de tableau de pertinences (RI), et par le contrôle de la pertinence de l'identifiant (ID) respectif à partir de la plage d'identifiants au moins un caractère de l'identifiant (ID) et de la valeur de pertinence (IDtest), vers laquelle l'indice de tableau de pertinences (RI) pointe, étant caché.

9. Procédé de contrôle selon l'une quelconque des revendications précédentes, **caractérisé en ce que** la première fonction de hachage (1) et/ou la deuxième fonction de hachage (2) et/ou la fonction d'association (3) comporte une opération modulo et/ou une opération de décalage servant à représenter l'indice de tableau respectif sur une plage à l'intérieur du tableau vers laquelle pointe l'indice de tableau.

10. Procédé de contrôle selon l'une quelconque des revendications précédentes, **caractérisé en ce que** le réseau de communication (17) comporte un bus (18), en particulier un réseau CAN ou un réseau d'interconnexion local.

11. Procédé de contrôle selon l'une quelconque des revendications précédentes, **caractérisé par** la détermination d'au moins un troisième indice de tableau de valeurs de référence par l'application d'au moins une troisième fonction de hachage sur l'identifiant (ID), par la détermination d'une troisième valeur de référence à l'aide du ou des troisièmes indices de tableau de valeurs de référence pointant vers la troisième valeur de référence et par la formation de l'indice de tableau de pertinences (RI) pour un tableau de valeurs de pertinence (30a, 30b) par l'association de la première valeur de référence, de la deuxième valeur de référence et de la ou des troisièmes valeurs de référence (V1, V2) à l'aide de la fonction d'association (3).

12. Procédé de contrôle selon la revendication 11, **caractérisé en ce que** le ou les troisièmes indices de tableau de valeurs de référence pointent vers le premier tableau de valeurs de référence, le deuxième tableau de valeurs de référence ou au moins un troisième tableau de valeurs de référence, le tableau de valeurs de référence respectif contenant la troisième valeur de référence.

13. Module de contrôle permettant le contrôle de pertinence d'une identifiant (ID), qui peut être transmise dans un message (20) à un dispositif de communication (24) par l'intermédiaire d'un réseau de communication (17), par l'application d'au moins une fonction de hachage (1, 2) sur l'identifiant (ID), comprenant des moyens (40-43) servant à :

  - déterminer un premier indice de tableau de valeurs de référence (H1) par l'application d'une première fonction de hachage (1) sur l'identifiant (ID) et déterminer une première valeur de référence (V1) à l'aide du premier indice de tableau de valeurs de référence (H1) pointant vers la première valeur de référence (V1),
  - déterminer un deuxième indice de tableau de valeurs de référence (H2) par l'application d'une deuxième fonction de hachage (2) sur l'identifiant (ID) et déterminer une deuxième valeur de référence (V1) à l'aide du deuxième indice de tableau de valeurs de référence (H2) pointant vers la deuxième valeur de référence (V1),
  - former un indice de tableau de pertinences (RI) pour un tableau de valeurs de pertinence (30a, 30b) par l'association des première et deuxième valeurs de référence (V1) à l'aide d'une fonction d'association (3),
  - déterminer une valeur de pertinence (IDtest) dans le tableau de valeurs de pertinence (30a, 30b) à l'aide de l'indice de tableau de pertinences (RI) pointant vers la valeur de pertinence (IDtest), et
  - contrôler la pertinence de l'identifiant (ID) pour le dispositif de communication (24) par la comparaison de l'identifiant (ID) avec la valeur de pertinence (IDtest) ou déterminer une non-pertinence de l'identifiant (ID) lorsque l'indice de tableau de pertinences (RI) n'est pas valide.

**14.** Module de contrôle selon la revendication 13, **caractérisé en ce qu'**il contient un code de programme qui est exécutable par un processeur (26, 27) et qui implémente les moyens (40-43) lors de l'exécution par le processeur (26, 27).

**15.** Moyens d'enregistrement sur lesquels est enregistré un module de contrôle selon la revendication 14.

**16.** Dispositif de communication (24) comportant un module de contrôle selon la revendication 13 ou 14.

**17.** Dispositif de communication (24) selon la revendication 16, **caractérisé en ce qu'**il est conçu en tant qu'appareil de commande électrique (12-16) pour un véhicule automobile (10) ou en tant qu'outil de test (21) pour un véhicule automobile (10).

Fig.2

Fig.5

Fig.1

EP 2 061 215 B1

**Fig.3a**

K1=0
K2=3

36b  H1  50  37b  V1  51

H1(41) →

H2(41) →

| H1 | V1 |
|----|----|
| 0 | 0 |
| 1 | 0 |
| 2 | 2 |
| 3 | 4 |
| 4 | 3 |

H2   V2

RI  32b  30b  31b  IDtest

| RI | IDtest |
|----|--------|
| 0 | 25 |
| 1 | 37 |
| 2 | 41 |
| 3 | 49 |
| 4 | 60 |

**Fig.3b**

36b  H1  50  37b  V1

H2(12) →

H1(12) →

| H1 | V1 |
|----|----|
| 0 | 0 |
| 1 | 0 |
| 2 | 2 |
| 3 | 4 |
| 4 | 3 |

H2   V2

RI  32b  30b  31b  IDtest

| RI | IDtest |
|----|--------|
| 0 | 25 |
| 1 | 37 |
| 2 | 41 |
| 3 | 49 |
| 4 | 60 |

**Fig.3c**

36b  H1  50  37b  V1  52

H1(60) →

H2(60) →

| H1 | V1 |
|----|----|
| 0 | 0 |
| 1 | 0 |
| 2 | 2 |
| 3 | 4 |
| 4 | 3 |

H2   V2

RI  32b  30b  31b  IDtest

| RI | IDtest |
|----|--------|
| 0 | 25 |
| 1 | 37 |
| 2 | 41 |
| 3 | 49 |
| 4 | 60 |

14

**Fig.4a**

**Fig.4b**

**Fig.4c**

**Fig.4d**

**EP 2 061 215 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1223725 A